# EUROPÄISCHE PATENTSCHRIFT

(11) **EP 2 665 398 B1**
(45) Veröffentlichungstag und Bekanntmachung des Hinweises auf die Patenterteilung: **17.10.2018**
(21) Anmeldenummer: 11804648.1
(22) Anmeldetag: 20.12.2011
(51) Int. Cl.: A47J 36/20

(54) **SIEBEINSATZ**
STRAINER INSERT
PASSOIRE

(30) Priorität: 18.01.2011 DE 102011002821
(43) Veröffentlichungstag der Anmeldung: 27.11.2013
(73) Patentinhaber: Silit-Werke GmbH & Co. KG, 88499 Riedlingen (DE)
(72) Erfinder: ROTH, Klaus, 88527 Unlingen (DE); LISON, Klara, 88524 Uttenweiler (DE)
(74) Vertreter: Grünecker Patent- und Rechtsanwälte PartG mbB
(86) Internationale Anmeldenummer: PCT/EP2011/006448
(87) Internationale Veröffentlichungsnummer: WO 2012/097848

(56) Entgegenhaltungen:
- DE-A1- 19 909 350
- DE-U1-202004 001 276
- DE-U1-202009 002 597
- JP-U- H0 248 022
- JP-U- 64 031 025
- US-A- 3 372 694

## Beschreibung

Die Erfindung bezieht sich auf einen Siebeinsatz für Kochgefäße.

Siebeinsätze für Kochgefäße sind in den unterschiedlichsten Formen bekannt. So dienen sie beispielsweise als Dämpfeinsatz zum Garen im Wasserdampf oder als Fixierung für empfindliches Kochgut, wie beispielsweise Spargel.

Beim Kochen von Getreideprodukten, wie beispielsweise Nudeln bzw. Pasta, im Gegensatz zum Dünsten von Gemüse mit dem dabei notwendigen niedrigen Wasserstand, schäumt das Kochwasser sehr stark auf, was leicht zum Überlaufen führen kann und den Herd verschmutzt. Um dies zu verhindern, sind bereits Pasta-Einsätze auf dem Markt, die mit einem für Wasser undurchlässigen Umfangsbereich über den Kochtopf überstehen, so dass sich der Schaum dort sammeln kann. Diese Lösung ist hinsichtlich ihrer Wirkung jedoch nicht optimal.

Die Druckschriften JPH 0248022 U, JP 64031025 U, DE 202004001276 U1, DE 19909350 A1 und DE 202009002597 U1 beschreiben jeweils einen Siebeinsatz für ein Kochgefäß, mit einem Siebkörper und einer Schaumbremse.

Der Erfindung liegt die Aufgabe zugrunde, einen Siebeinsatz für ein Kochgefäß bereitzustellen, der sich insbesondere zum Kochen von aufschäumendem Kochgut eignet.

Die Aufgabe wird durch die Merkmale des Anspruches 1 gelöst. Durch die erfindungsgemäß vorgesehene Schaumbremse wird erreicht, dass der beim Kochen entstehende Schaum im Kochgefäß zurückgehalten wird, so dass das lästige Überlaufen nicht mehr auftritt.

Vorteilhafte Weiterbildungen der Erfindung sind den Unteransprüchen zu entnehmen.

In der konstruktiv einfachsten Ausgestaltung begrenzt die Schaumbremse einen Zwischenraum mit einem vom Volumen des Siebeinsatzes abweichendem Volumen und ist als Hindernis quer zur Aufsteigrichtung des Schaums angeordnet, so dass der Schaum zerplatzt und zurückgehalten wird.

Durch die Anordnung der Schaumbremse außerhalb des Siebkörpers wird die Befüllung und Entleerung des Siebeinsatzes mit dem Kochgut nicht behindert. Außerdem befindet sich die Schaumbremse dann in einem Bereich, wo sich Schaum ungehindert bilden und ungehindert aufsteigen kann.

Eine im Wesentlichen radiale Anordnung bringt eine sehr gute Hinderniswirkung.

Bevorzugt wird als Schaumbremse ein Siebstreifen verwendet.

Um sicherzustellen, dass der Siebkörper an einer Stelle im Kochgefäß angeordnet wird, an der die Schaumbremse ihre optimale Wirkung entfalten kann, ist bevorzugt ein Abstandshalter vorgesehen.

Die Konstruktion wird vereinfacht, wenn die Schaumbremse in den Abstandshalter integriert wird.

Der erfindungsgemäße Siebeinsatz ist so ausgebildet, dass er in allseitigem Abstand zum Kochgefäß gehalten wird, wobei die Bodenabstände zwischen dem Siebkörper und dem Kochgefäß durch eine Auflagefläche sichergestellt wird, die den Siebkörper auf den Rand des Kochgefäßes hält, wobei an dieser Stelle eine Dichtung vorgesehen ist, die verhindert, dass Schaum, der möglicherweise die Schaumbremse umgangen hat, doch überläuft.

Dem gleichen Zweck dient ein sich über die Schaumbremse erstreckender, wasserundurchlässiger Bereich des Siebeinsatzes, wobei dort der Schaum aufgefangen wird, der doch den Weg durch das Kochgut im Inneren des Siebeinsatzes nach oben gefunden hat.

Der erfindungsgemäße Siebeinsatz enthält bevorzugt eine Abtropfhilfe, die insbesondere zum Kochen von Nudeln/Pasta hilfreich ist.

Die Abtropfhilfe ist bevorzugt als Rastvertiefung im Siebkörper ausgebildet, mit der der Siebeinsatz auf dem Rand eines Kochgefäßes, gegen Abrutschen arretiert, aufgesetzt werden kann, so dass das Kochgut ungehindert abtropfen kann.

Ein undurchlässiger Bereich im Siebeinsatz, der in geeigneter Weise der Rastvertiefung zugeordnet ist, verhindert, dass Flüssigkeit aus dem schräggestellten Siebeinsatz doch am Kochgefäß außen herunterläuft.

Der erfindungsgemäße Siebeinsatz kann zum Nachrüsten bestehender Kochgefäße ausgebildet sein, da die üblichen Kochgefäße, zumindest was Innendurchmesser und Höhe betrifft, sehr häufig vergleichbare Abmessungen aufweisen.

Der erfindungsgemäße Siebeinsatz kann jedoch auch als Set zusammen mit einem Kochgefäß und speziell an dieses Kochgefäß angepasst, verkauft werden.

Ein Ausführungsbeispiel der Erfindung wird nachfolgend anhand der Zeichnungen näher erläutert. Es zeigen:
- Fig. 1: eine Darstellung eines erfindungsgemäßen Siegeinsatzes in einem Kochgefäß im Teilschnitt,
- Fig. 2: eine Seitenansicht des erfindungsgemäßen Siebeinsatzes,
- Fig. 3: eine perspektivische Darstellung eines erfindungsgemäßen Siebeinsatzes, und
- Fig. 4: der erfindungsgemäße Siebeinsatz in Abtropfstellung.

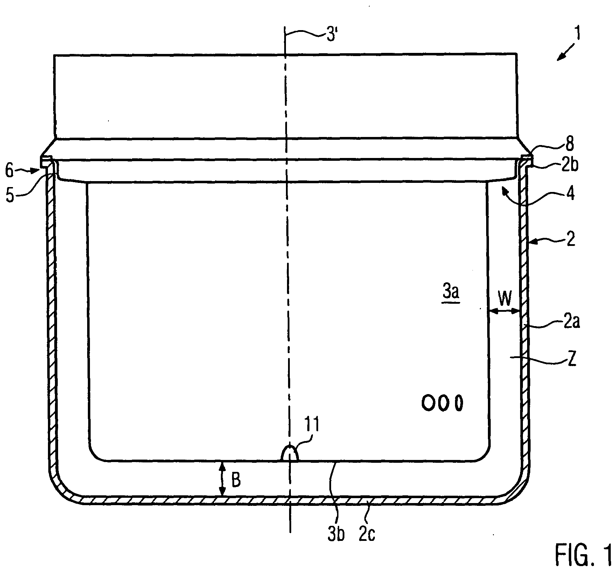

Fig. 1 zeigt einen erfindungsgemäßen Siebeinsatz 1, der in einem Kochgefäß 2 in Form eines Kochtopfes üblicher Abmessungen aufgenommen ist.

Der Kochtopf 2 enthält eine mit einer zum Kochen von Flüssigkeit ausgebildeten, hohen Wandung 2a mit einem oberen Rand 2b, auf den normalerweise der Deckel aufgesetzt wird, und einen Boden 2c. Die Größe des Kochtopfes entspricht der Größe üblicher Kochtöpfe, wie sie z.B. zum Kochen von Nudeln/Pasta verwendet werden.

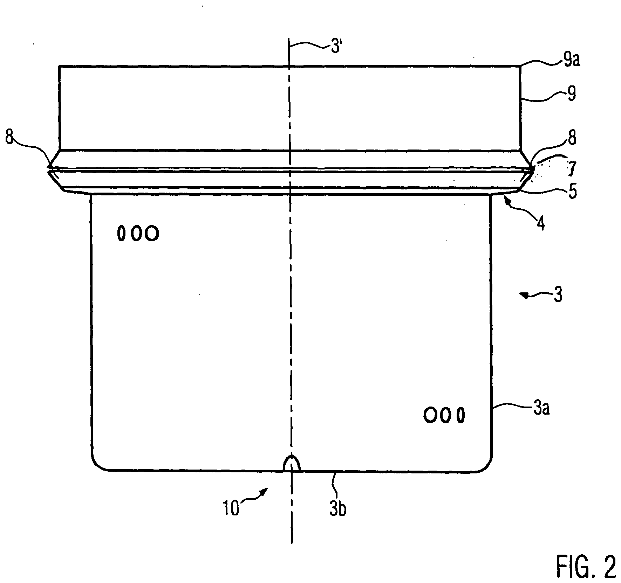

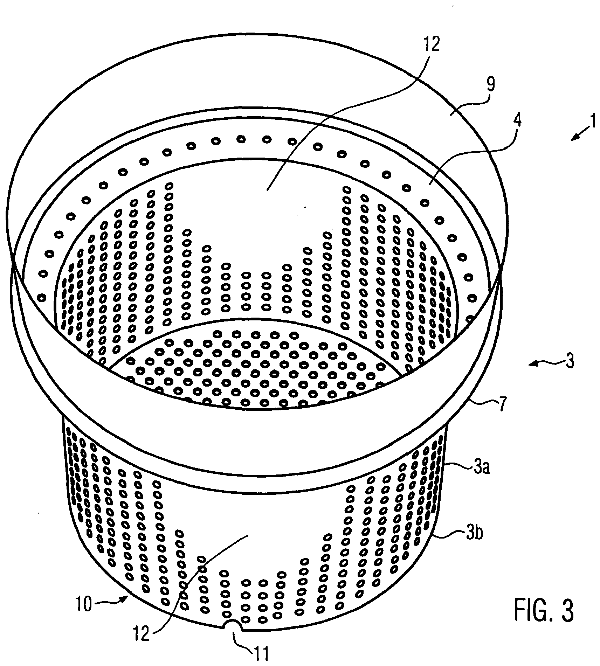

Der Siebeinsatz 1 ist in den Fig. 2 und 3 näher dargestellt. Der Siebeinsatz 1 enthält den eigentlichen Siebkörper 3 mit einer im Wesentlichen zylindrischen Wandung 3a mit einer Mittellinie 3' und einem Boden 3b. Im dargestellten Ausführungsbeispiel ist der Siebkörper 3 als Lochsieb ausgebildet, d.h. er enthält eingestanzte oder sonst wie eingeformte Löcher vorbestimmter Größe und vorbestimmter Verteilung in einem ansonsten homogenen, dünnwandigen Material, wie z.B. einem Metallblech, bevorzugt Edelstahl, oder einem temperaturbeständigen und lebensmitteltauglichen Kunststoff.

Der Siebeinsatz 1 enthält weiterhin eine Schaumbremse 4, die im dargestellten Ausführungsbeispiel als Steg oder Streifen ausgebildet ist, der im Wesentlichen radial über die Seitenwandung 3a des Siebkörpers 3 vorsteht und die obere Begrenzung des Siebkörpers 3a, d. h. des gelochten Bereichs, bildet. Wie insbesondere in Fig. 3 zu sehen, besteht die Schaumbremse 4 aus dem gleichen Material wie der Siebkörper 3 und ist einstückig mit ihm verbunden, kann jedoch auch als gesondertes Bauteil und/oder aus einem anderen Material ausgebildet sein, z.B. einer Materialkombination aus einem Lochblech aus Edelstahl und einer Schaumbremse aus Kunststoff. Die Schaumbremse 4 begrenzt einen Zwischenraum Z zwischen den Wandungen 3a des Siebkörpers 3 und 2a des Kochtopfes 2 nach oben und bildet damit ein vom Volumen des Siebkörpers 3 getrenntes Volumen, das einen gegenüber dem Volumen im Inneren des Siebkörpers 3 verschiedenen Druck aufweist, wobei dieser Druckunterschied den Schaum zum Platzen bringt. Wenigstens eine Lochreihe des Siebkörpers befindet sich im oberen Bereich, entweder seitlich direkt unterhalb der Schaumbremse 4, wobei die Schaumbremse 4 selbst undurchlässig sein kann oder mit mindestens einer, bevorzugt jedoch mehreren Lochreihen versehen ist.

Die Schaumbremse 4 kann an ihrem radial äußeren Ende durch einen undurchlässigen Steg 5 begrenzt sein, der sich im Wesentlichen parallel zur Mittelachse 3' der Wandung 3a des Siebkörpers 3 erstreckt. Die Schaumbremse 4 und der Steg 5 bilden somit einen Anschlag 6 zum Zentrieren des Siebkörpers 1 im Kochgefäß 2. Die radiale Erstreckung des Anschlages 6 ist so bemessen, dass die Wandung 3a des Siebkörpers 3 zum Ausbilden des Zwischenraums Z einen reichlichen Abstand W zur Wandung 2a einhält, der bevorzugt mehr als 1 cm und bis zu 5 cm betragen kann.

Der Siebeinsatz 1 enthält weiterhin eine Auflagefläche 7, die oberhalb des Steges 5 angeordnet ist und radial zur Mittelachse 3' des Siebeinsatzes 1 vorsteht. Mit der Auflagefläche sitzt der Siebeinsatz 1, wie Fig. 1 zeigt, auf dem Rand 2b des Kochgefäßes 2 derart auf, dass die Böden 2c, 3b des Kochgefäßes 2 und des Siebkörpers 3 einen Abstand B voneinander aufweisen, der bevorzugt gleich dem Abstand W ist, so dass sich rund um den Siebkörper 3 ein von Kochgut freier Zwischenraum Z erstreckt. Der Auflagefläche 7 ist eine Dichtung 8 zugeordnet, die eine durch das Gewicht des Siebeinsatzes 1 und des darin befindlichen Kochgutes abgesicherte Abdichtung zum Rand 2b des Kochgefäßes 2 sicherstellt. Im Ausführungsbeispiel nach Fig.1 ist die Dichtung 8 in Form eines Dichtrings an der Auflagefläche 7 befestigt, während in Fig. 2 der Dichtring 8 in einer Vertiefung des Steges 5 sitzt und sich an die Wandung 2a des Kochtopfes 2 anlegt.

Die Schaumbremse 4 kann jedoch gleichzeitig einen Auflagebereich 7 enthalten, wodurch der Steg 5 entbehrlich wird. Dann kann z.B. mit einer ausgeprägten Dichtungsform (z.B. Aufnahmevertiefung für den Rand) oder mit Noppen zentriert werden.

An der der Schaumbremse 4 abgewandten Seite der Auflagefläche 7 setzt sich der Siebeinsatz 1 mit einem undurchlässigen Umfangsbereich 9 fort, der aus dem Kochgefäß 2 herausragt und einen wesentlich größeren Durchmesser als die Wandung 3a des Siebkörpers 3 aufweist und gleich oder geringfügig größer ist als der Durchmesser im Bereich des Steges 5 ist. Durch diesen Umfangsbereich 9 wird ein Stauraum zum Aufnehmen von Schaum geschaffen. Der obere Rand 9a des Umfangsbereiches 9 kann den Deckel aufnehmen, der normalerweise auf dem Kochgefäß 2 sitzt, oder kann durch einen eigenen Deckel verschlossen werden.

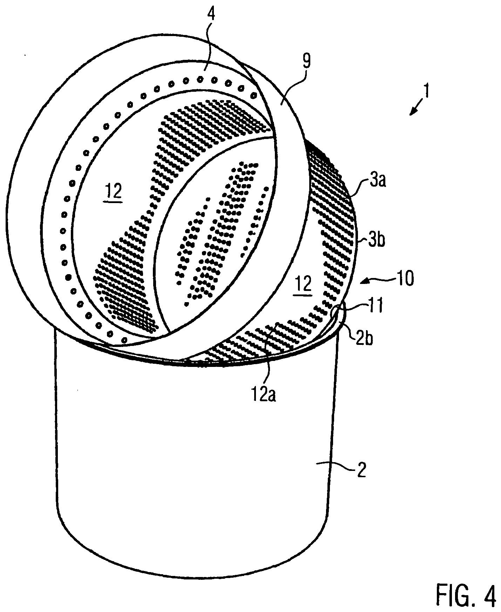

Die Abmessungen des Siebeinsatzes 1 sind so gestaltete, dass er zumindest zum überwiegenden Teil in das Kochwasser hineinreicht, d.h. mit Kochwasser befüllt ist und auf jeden Fall der Abstand W zwischen den Wandungen 3a und 2a und bevorzugt auch der Abstand B zwischen den Böden 3b und 2c einen ausreichenden Zwischenraum Z bilden, in dem das Kochwasser ungehindert aufwallen und Schaum bilden kann, so dass sich ein Druckunterschied ausbildet, der zum Zerplatzen des Schaums führt.. Dieser Zwischenraum Z wird nach oben hin durch die Schaumbremse 4 abgeschlossen, die dadurch ein Hindernis gegen das Aufsteigen des Schaums bildet. Durch den Abstand zwischen der Schaumbremse 4 und der Auflagefläche 7 liegt die Schaumbremse 4 im Abstand unterhalb des Randes 2b des Kochgefäßes 2, so dass eventuell doch übertretender Schaum nicht sofort den Rand 2b erreicht. Durch die Anordnung der Dichtung 8 und der Auflagefläche 7 wird jedoch auch der Rand 2b abgedichtet, so dass hier nichts überlaufen kann. Trotzdem kann durch die Lochreihen der Schaumbremse und/oder des oberen Bereichs des Siebkörpers 3 Dampf entweichen.
Ein bevorzugtes Kochgefäß kann die folgenden Abmessungen aufweisen:
Topf ohne Pastaeinsatz, maximale Füllmenge: 8500 mL
Topf mit Pastaeinsatz, Bereich Z: 3050 mL
Empfohlene maximale Füllmenge mit Wasser: 5 L
Bevorzugt beträgt das Verhältnis der empfohlenen maximalen Füllmenge zum Volumen Z 1,4 bis 1,8, bevorzugt 1,6 bis 1,7.
Der erfindungsgemäße Siebeinsatz 1 weist weiterhin eine Abtropfhilfe 10 auf, die anhand der Fig. 3 und 4 näher erläutert wird. Die Abtropfhilfe 10 ist zusammen mit der Schaumbremse 4 vorgesehen. Die Abtropfhilfe 10 enthält eine Rasteinrichtung 11, die im dargestellten Ausführungsbeispiel als vom Boden 3b des Siebkörpers 3 her in den Siebkörper 3 eingeprägte Vertiefung 11 ausgebildet ist, die so bemessen ist, dass sie den Rand 2b des Kochgefäßes 2 aufnehmen kann. Bevorzugt sind an zwei diametral gegenüberliegenden Stellen im Siebeinsatz 2 jeweils Rastvertiefungen 11 vorgesehen.
Die Abtropfhilfe 10 kann weiterhin jeweils einen undurchlässigen Bereich 12 in diametral gegenüberliegenden, seitlichen Bereichen der Wandung 3a des Siebkörpers 3 enthalten, der sich oberhalb der jeweiligen Rastvertiefung 11 von oben von der Schaumbremse 4 in Richtung auf den Boden 3b, bevorzugt kreissegmentförmig, über die Wandung 3a erstreckt, wobei die breite Basis des für Wasser undurchlässigen Bereichs 12 am Übergang der Wandung 3a zur Schaumbremse 4 liegt. Durch den gegenüber dem Innendurchmesser des Kochgefäßes 2 stärker verkleinerten Außendurchmesser der Wandung 3a des Siebkörpers 3 kann der Siebeinsatz 1, wie Fig. 4 zeigt, schräg über die Öffnung des Kochgefäßes 2 gelegt werden, wobei die Rasteinrichtung 11 ein Wegrollen und Abrutschen in Axialrichtung verhindern. Dabei sind die undurchlässigen Bereiche 12 den Rasteinrichtungen 11 so zugeordnet, dass sich die undurchlässigen Bereiche 12 mit ihrer beim Kippen unteren Begrenzung 12a seitlich etwa am Rand 2b oder knapp unterhalb davon befinden, wenn sich der Siebeinsatzes 1 in der in Fig. 4 gezeigten, auf dem Rand 2b schräg abgestellten Abtropflage befindet. Dadurch kann an dieser Stelle kein Wasser austreten, das dort über den Rand 2b des Kochtopfes 2 fließen könnte.

In Abwandlung des beschriebenen und gezeichneten Ausführungsbeispiels kann der Siebeinsatz auch aus anderen für Wasser durchlässigen Materialien mit Rückhaltefunktion für Kochgut, also beispielsweise einem Drahtgeflecht, einem Lochsieb aus geeignetem Kunststoff, ein Gitter oder dgl. bestehen. Auch die Schaumbremse muss nicht unbedingt von gleicher Art wie die Wandung des Siebkörpers sein, sondern kann eine abweichende Konstruktion aufweisen. Auch muss die Schaumbremse nicht strikt radial, sondern kann auch schräg gestellt sein.

## Patentansprüche

1. Siebeinsatz (1) für ein Kochgefäß (2), insbesondere zum Garen von aufschäumendem Kochgut, mit einem Siebkörper (3a) und einer Schaumbremse (4),
**dadurch gekennzeichnet, dass**
der Siebkörper (3) eine Auflagefläche (7) für den Rand (2b) eines Kochgefäßes (2) aufweist und mit einer der Auflagefläche (7) zugeordneten Dichtung (8) versehen ist, um eine durch das Gewicht des Siebeinsatzes (1) und darin befindlichen Kochgutes abgesicherte Abdichtung zum Rand (2b) des Kochgefäßes (2) sicherzustellen.

2. Siebeinsatz nach Anspruch 1, **dadurch gekennzeichnet, dass** die Schaumbremse (4) ein quer zur Aufsteigrichtung des Schaums angeordnetes Hindernis umfasst, das einen Zwischenraum (Z) mit einem gegenüber dem Volumen des Siebeinsatzes (1) unterschiedlichem Volumen begrenzt.

3. Siebeinsatz nach Anspruch 1 oder 2, **dadurch gekennzeichnet, dass** die Schaumbremse (4) außerhalb des Siebkörpers (3) angeordnet ist.

4. Siebeinsatz nach einem der Ansprüche 1 bis 3, **dadurch gekennzeichnet, dass** die Schaumbremse (4) vom Siebkörper (3) im Wesentlichen radial nach außen vorsteht.

5. Siebeinsatz nach einem der Ansprüche 1 bis 4, **dadurch gekennzeichnet, dass** die Schaumbremse (4) als Siebstreifen ausgebildet ist.

6. Siebeinsatz nach einem der Ansprüche 1 bis 5, **dadurch gekennzeichnet, dass** der Siebkörper (3) mit einem radial vorstehenden Abstandshalter (6) versehen ist.

7. Siebeinsatz nach Anspruch 6, **dadurch gekennzeichnet, dass** die Schaumbremse (4) im Abstandshalter (6) integriert ist.

8. Siebeinsatz nach Anspruch 6 oder 7, **dadurch gekennzeichnet, dass** die Auflagefläche (7) radial über den Abstandshalter (6) vorsteht.

9. Siebeinsatz nach einem der Ansprüche 1 bis 8, **dadurch gekennzeichnet, dass** oberhalb der Schaumbremse (4) ein wasserundurchlässiger Umfangsbereich (9) vorgesehen ist.

10. Siebeinsatz nach einem der Ansprüche 1 bis 9, **gekennzeichnet durch** eine Abtropfhilfe (10) zum Schrägstellen des Siebkörpers (3).

11. Siebeinsatz nach Anspruch 10, **dadurch gekennzeichnet, dass** die Abtropfhilfe (10) wenigstens eine Rastvertiefung (11) am Siebkörper (3) enthält.

12. Siebeinsatz nach Anspruch 11, **dadurch gekennzeichnet, dass** die Abtropfhilfe (10) einen wasserundurchlässigen Bereich (12) im Siebkörper (3) aufweist, der der Rastvertiefung (11) räumlich derart zugeordnet ist, dass er sich beim Schrägstellen durch die Rastvertiefung (11) im Bereich des Randes (2b) eines Kochtopfes (2) befindet.

13. Kochgefäß mit einem Siebeinsatz nach einem der Ansprüche 1 bis 12.

## Claims

1. Strainer insert (1) for a cooking vessel (2), in particular for cooking foaming goods to be cooked, comprising a strainer body (3a) and a foam limiter (4),
**characterized in that**
the strainer body (3) has a support surface (7) for the edge (2b) of a cooking vessel (2) and is provided with a seal (8) assigned to the support surface (7) to ensure a sealing to the edge (2b) of the cooking vessel (2), which sealing is secured by the weight of the strainer insert (1) and the goods being cooked therein.

2. Strainer insert according to claim 1, **characterized in that** the foam limiter (4) comprises an obstacle arranged transversely to the ascending direction of the foam, which obstacle limits an intermediate space (Z) with a volume different from the volume of the strainer insert (1).

3. Strainer insert according to claim 1 or 2, **characterized in that** the foam limiter (4) is arranged outside the strainer body (3).

4. Strainer insert according to one of claims 1 to 3, **characterized in that** the foam limiter (4) projects substantially radially outwards from the strainer body (3).

5. Strainer insert according to one of claims 1 to 4, **characterized in that** the foam limiter (4) is configured as a strainer strip.

6. Strainer insert according to one of claims 1 to 5, **characterized in that** the strainer body (3) is provided with a radially projecting spacer (6).

7. Strainer insert according to claim 6, **characterized in that** the foam limiter (4) is integrated in the spacer (6).

8. Strainer insert according to claim 6 or 7, **characterized in that** the support surface (7) projects radially beyond the spacer (6).

9. Strainer insert according to one of claims 1 to 8, **characterized in that** a water-impermeable peripheral region (9) is provided above the foam limiter (4).

10. Strainer insert according to one of claims 1 to 9, **characterized by** a drip-off aid (10) for inclining the strainer body (3).

11. Strainer insert according to claim 10, **characterized in that** the drip-off aid (10) contains at least one detent recess (11) on the strainer body (3).

12. Strainer insert according to claim 11, **characterized in that** the drip-off aid (10) comprises a water-impermeable region (12) in the strainer body (3), which region is spatially assigned to the detent recess (11) such that it is located in the region of the edge (2b) of a cooking pot (2) when inclined through the detent recess (11).

13. Cooking vessel with a strainer insert according to any of claims 1 to 12.

## Revendications

1. Panier-passoire de cuisson (1) amovible pour un récipient de cuisson (2), notamment pour la cuisson de produits à cuire produisant de l'écume, comprenant un corps de panier (3a) et un frein d'écume (4),
**caractérisé**
**en ce que** le corps de panier (3) présente une surface d'appui (7) pour le bord (2b) d'un récipient de cuisson (2), et est doté d'un joint d'étanchéité (8) associé à la surface d'appui (7), en vue d'assurer une étanchéité par rapport au bord (2b) du récipient de cuisson (2), garantie par le poids du panier-passoire de cuisson (1) amovible et du produit à cuire, qui s'y trouve.

2. Panier-passoire de cuisson amovible selon la revendication 1, **caractérisé en ce que** le frein d'écume (4) comprend un obstacle, qui est agencé transversalement à la direction ascendante de l'écume, et délimite un espace intermédiaire (Z) avec un volume différent par rapport au volume du panier-passoire de cuisson (1) amovible.

3. Panier-passoire de cuisson amovible selon la revendication 1 ou la revendication 2, **caractérisé en ce que** le frein d'écume (4) est agencé à l'extérieur du corps de panier (3).

4. Panier-passoire de cuisson amovible selon l'une des revendications 1 à 3, **caractérisé en ce que** le frein d'écume (4) fait saillie sensiblement de manière radiale vers l'extérieur à partir du corps de panier (3).

5. Panier-passoire de cuisson amovible selon l'une des revendications 1 à 4, **caractérisé en ce que** le frein d'écume (4) est réalisé sous la forme d'une bande de passoire.

6. Panier-passoire de cuisson amovible selon l'une des revendications 1 à 5, **caractérisé en ce que** le corps de panier (3) est muni d'une entretoise d'espacement (6) en saillie radiale.

7. Panier-passoire de cuisson amovible selon la revendication 6, **caractérisé en ce que** le frein d'écume (4) est intégré à l'entretoise d'espacement (6).

8. Panier-passoire de cuisson amovible selon la revendication 6 ou la revendication 7, **caractérisé en ce que** la surface d'appui (7) dépasse radialement au-delà de l'entretoise d'espacement (6).

9. Panier-passoire de cuisson amovible selon l'une des revendications 1 à 8, **caractérisé en ce qu'**au-dessus du frein d'écume (4), il est prévu une zone périphérique (9) imperméable à l'eau.

10. Panier-passoire de cuisson amovible selon l'une des revendications 1 à 9, **caractérisé par** une aide à l'égouttage (10) permettant de placer le corps de panier (3) en position inclinée.

11. Panier-passoire de cuisson amovible selon la revendication 10, **caractérisé en ce que** l'aide à l'égouttage (10) comprend au moins un creux d'encliquetage (11) sur le corps de panier (3).

12. Panier-passoire de cuisson amovible selon la revendication 11, **caractérisé en ce que** l'aide à l'égouttage (10) comprend une zone (12) imperméable à l'eau dans le corps de panier (3), qui est associée spatialement au creux d'encliquetage (11) de manière à se situer dans la région du bord (2b) d'une marmite de cuisson (2), lorsque le panier-passoire est mis en position inclinée par le creux d'encliquetage (11).

13. Récipient de cuisson comprenant un panier-passoire de cuisson amovible selon l'une des revendications 1 à 12.
